# EUROPÄISCHE PATENTSCHRIFT

(11) **EP 3 109 186 B1**
(45) Veröffentlichungstag und Bekanntmachung des Hinweises auf die Patenterteilung: **09.05.2018**
(21) Anmeldenummer: 16170944.9
(22) Anmeldetag: 24.05.2016
(51) Int. Cl.: B65G 21/10, B65G 23/22

(54) **ANTRIEBSVORRICHTUNG FÜR EINE FÖRDERKETTE MIT SPIEGELSYMMETRISCHER GRUNDPLATTE**
DRIVE DEVICE FOR A CONVEYOR CHAIN WITH MIRROR SYMMETRICAL BASE PLATE
DISPOSITIF D'ENTRAINEMENT POUR UNE CHAINE DE TRANSPORT COMPRENANT UNE PLAQUE DE BASE SYMETRIQUE

(30) Priorität: 24.06.2015 DE 102015211703
(43) Veröffentlichungstag der Anmeldung: 28.12.2016
(73) Patentinhaber: ROBERT BOSCH GMBH, 70442 Stuttgart (DE)
(72) Erfinder: Guener, Till, 78056 Villingen-Schwenningen (DE)
(74) Vertreter: Maiß, Harald

(56) Entgegenhaltungen:
- EP-A2- 1 710 176
- DE-A1- 10 236 559
- DE-U- 7 428 264
- JP-U- S58 154 210
- Flexlink: "Spare parts Conveyor system X65", , 18. März 2015 (2015-03-18), Seiten 23-24, XP055315799, Gefunden im Internet: URL:http://www.flexlink.com/zcms/zpublish/ 45/uploads/45/tech_lib/1417090790080649777 1_SPC_ChapterX65.pdf [gefunden am 2016-11-02]

## Beschreibung

Die Erfindung betrifft eine Antriebsvorrichtung gemäß dem Oberbegriff von Anspruch 1.

Aus dem Katalog, der am 22.05.2015 unter der Internetadresse http://www.flexlink.com/zcms/zpublish/45/uploads//45/tech_lib/ 14170972562476975936_03X65.pdf abrufbar war, ist unter der Bezeichnung "End drive units X65, suspended, slip clutch" eine Antriebsvorrichtung nach dem Oberbergriff des Anspruchs 1 bekannt. Die Antriebsvorrichtung ist zur Verwendung mit einer Förderkette vorgesehen. Sie umfasst ein Antriebszahnrad, ein Antriebsgehäuse, eine Getriebebaugruppe und einen Antriebsmotor. Das Antriebszahnrad ist bezüglich einer ersten Drehachse drehbar in dem Antriebsgehäuse gelagert, wobei es in Antriebseingriff mit der Förderkette bringbar ist. Das Antriebsgehäuse weist einen Ketteneinlauf und einen Kettenauslauf auf, wobei die Förderkette vom Ketteneinlauf über das Antriebszahnrad weiter zum Kettenauslauf gleitbeweglich geführt ist. Der Kettenein- und der Kettenauslauf verlaufen parallel zu einer Förderrichtung, welche senkrecht zur ersten Drehachse ausgerichtet ist. Der Antriebsmotor ist in Richtung einer Hochachse unterhalb des Kettenein- und des Kettenauslaufs angeordnet, wobei er über die Getriebebaugruppe in Drehantriebsverbindung mit dem Antriebszahnrad steht. Die Hochachse ist dabei senkrecht zur ersten Drehachse und zur Förderrichtung ausgerichtet.
Anzumerken ist, dass aus obigem Katalog mehrere ähnliche Antriebsvorrichtungen bekannt sind, bei denen der Antriebsmotor jeweils an einer anderen Stelle angeordnet ist. Die vorliegende Erfindung beschäftigt sich ausschließlich mit der vorstehend beschriebenen Anordnung des Antriebsmotors, bei der es möglich ist, die Getriebebaugruppe sowohl links als auch rechts an dem Antriebsgehäuse anzubauen, wobei der Bauraum, der vom Antriebsmotor eingenommen wird, im Wesentlichen der gleiche bleibt.

Weiter wird auf den Katalog verwiesen, der am 01.03.2017 unter der Internetadresse www.flexlink.com/zcms/zpublish/45/uploads//45/tech_lib/14170907900806497771_S PC ChapterX65.pdf abrufbar war. Die DE 74 28 264 U und die EP 1 710 176 A2 zeigen Fördereinrichtungen mit einem Riemenantrieb.

Ein Vorteil der vorliegenden Erfindung besteht darin, dass sowohl für den Links- als auch für den Rechtsanbau der Getriebebaugruppe am Antriebsgehäuse identische Bauteile verwendet werden können, welche nur in unterschiedlicher Weise zusammengebaut werden müssen. Diese Bauteile können damit in hohen Stückzahlen kostengünstig hergestellt werden. Weiter müssen weniger unterschiedliche Teile bevorratet werden, wobei dennoch viele Varianten von Antriebsvorrichtungen bereitgestellt werden können.

Gemäß dem unabhängigen Anspruch wird vorgeschlagen, dass die Getriebebaugruppe eine Grundplatte aufweist, welche sowohl am Antriebsgehäuse als auch am Antriebsmotor befestigt ist, wobei die Grundplatte senkrecht zur ersten und zur zweiten Drehachse angeordnet ist, wobei die Grundplatte mehrere erste, mehrere zweite, mehrere dritte und mehrere vierte Befestigungsdurchbrüche aufweist, die jeweils separat voneinander ausgebildet sind, wobei die ersten und die dritten Befestigungsdurchbrüche jeweils gleichförmig verteilt um die erste Drehachse angeordnet sind, wobei die zweiten und die vierten Befestigungsdurchbrüche jeweils gleichförmig verteilt um eine zweite Drehachse angeordnet sind, welche parallel beabstandet zur ersten Drehachse angeordnet ist, wobei das Antriebsgehäuse sowohl an den ersten als auch an den zweiten Befestigungsdurchbrüchen befestigbar ist, wobei der Antriebsmotor sowohl an den dritten als auch den vierten Befestigungsdurchbrüchen befestigbar ist. An der Grundplatte sind damit von vorneherein alle Befestigungsdurchbrüche vorgesehen, die sowohl für den Links- als auch für den Rechtsanbau der Getriebebaugruppe benötigt werden.

Die Förderkette ist vorzugsweise endlos umlaufend ausgebildet. Es kann ein Kettenauslauf vorgesehen sein, der in Richtung der Hochachse unterhalb des Ketteneinlaufs und parallel zu diesem angeordnet ist, wobei der Antriebsmotor unterhalb des Kettenauslaufs angeordnet ist. Die ersten und die zweiten Befestigungsdurchbrüche sind beispielsweise als Senkbohrungen ausgebildet. Das Antriebsgehäuse ist entweder an den ersten oder den zweiten Befestigungsdurchbrüchen befestigt, vorzugsweise mittels Senkkopfschrauben. Der Antriebsmotor ist entweder an den dritten oder den vierten Befestigungsdurchbrüchen befestigt. Bei dem Antriebsmotor handelt es sich vorzugsweise um einen Getriebemotor, der aus einem Elektromotor und einem Zahnradgetriebe zusammengesetzt ist. Die zweite Drehachse ist die Drehachse eines Antriebsmittels des Antriebsmotors, über das die Drehantriebsverbindung mit der Getriebebaugruppe herstellbar ist.

In den abhängigen Ansprüchen sind vorteilhafte Weiterbildungen und Verbesserungen der Erfindung angegeben.

Es kann vorgesehen sein, dass die erste und die zweite Drehachse spiegelsymmetrisch bezüglich einer Symmetrieebene angeordnet sind, wobei die ersten Befestigungsdurchbrüche bezüglich der Symmetrieebene spiegelsymmetrisch zu den dritten Befestigungsdurchbrüchen angeordnet sind, wobei die zweiten Befestigungsdurchbrüche bezüglich der Symmetrieebene spiegelsymmetrisch zu den vierten Befestigungsdurchbrüchen angeordnet sind. Damit reicht es aus, die Getriebebaugruppe bezüglich der Symmetrieebene um 180° zu wenden, um sie an der gegenüberliegenden Seite des Antriebsgehäuses befestigen zu können.

Es kann vorgesehen sein, dass der Neigungswinkel zwischen der Symmetrieebene und der Förderrichtung zwischen 15° und 75° beträgt. Der genannte Neigungswinkel beträgt vorzugsweise 60°. Hierdurch ergibt sich eine besonders platzsparende Anordnung des Antriebsmotors unterhalb des Antriebsgehäuses. Darüber hinaus können die verschiedenen Befestigungsdurchbrüche problemlos so angeordnet werden, dass sie sich nicht gegenseitig überschneiden.

Es kann vorgesehen sein, dass die Getriebebaugruppe ein erstes Getrieberad aufweist, welches bezüglich der ersten Drehachse drehbar ist, wobei die Getriebebaugruppe ein zweites Getrieberad aufweist, welches bezüglich der zweiten Drehachse drehbar ist, wobei das erste und das zweite Getrieberad jeweils ein Antriebsmittel aufweisen, welches sowohl mit dem Antriebsmotor als auch mit dem Antriebszahnrad in Drehantriebsverbindung bringbar ist, wobei das erste und das zweite Getrieberad von einem gemeinsamen endlosen Zugmittel umschlungen werden. Damit können beide Getrieberäder sowohl mit dem Antriebsmotor als auch mit dem Antriebszahnrad in Drehantriebsverbindung gebracht werden, wobei je nach Anbauvariante der Getriebebaugruppe nur jeweils eine dieser Möglichkeiten genutzt wird.

Das Antriebsmittel ist vorzugsweise als Innen- oder Außensechskantprofil ausgebildet. Das erste und das zweite Getrieberad sind vorzugsweise als Zahnriemenräder ausgebildet, wobei das Zugmittel ein Zahnriemen ist. Das erste und das zweite Getrieberad sind vorzugsweise identisch ausgebildet. Das erste und das zweite Getrieberad haben vorzugsweise jeweils eine einzige Seitenführung für den Zahnriemen, wobei sie um 180° gedreht zueinander eingebaut sind, so dass beiden Seitenrändern des Zahnriemens eine Seitenführung zugeordnet ist.

Es kann vorgesehen sein, dass die Grundplatte mehrere fünfte und mehrere sechste Befestigungsdurchbrüche aufweist, die jeweils separat voneinander und von den übrigen Befestigungsdurchbrüchen ausgebildet sind, wobei die fünften Befestigungsdurchbrüche gleichförmig verteilt um die erste Drehachse angeordnet sind, wobei die sechsten Befestigungsdurchbrüche gleichförmig verteilt um die zweite Drehachse angeordnet sind, wobei die fünften Befestigungsdurchbrüche bezüglich der Symmetrieebene spiegelsymmetrisch zu den sechsten Befestigungsdurchbrüchen angeordnet sind. Die fünften und die sechsten Befestigungsdurchbrüche dienen zur Befestigung von Drehlagern der Getriebebaugruppe an der Grundplatte. Durch die vorgeschlagene Anordnung wird eine Kollision der fünften und sechsten Befestigungsdurchbrüche mit den übrigen Befestigungsdurchbrüchen vermieden.

Es kann vorgesehen sein, dass das erste Getrieberad in einer gesonderten ersten Lagerbaugruppe drehbar gelagert ist, welche an den fünften Befestigungsdurchbrüchen befestigt ist, wobei das zweite Getrieberad in einer gesonderten zweiten Lagerbaugruppe drehbar gelagert ist, welche an den sechsten Befestigungsdurchbrüchen befestigt ist. Die genannten Lagerbaugruppen umfassen vorzugsweise jeweils ein Radialwälzlager.

Es kann vorgesehen sein, dass jeweils vier erste und vier zweite Befestigungsdurchbrüche und jeweils vier dritte und vier vierte Befestigungsdurchbrüche und gewünschtenfalls jeweils vier fünfte und vier sechste Befestigungsdurchbrüche vorgesehen sind. Hierdurch wird vermieden, dass sich die genannten Befestigungsdurchbrüche gegenseitig überschneiden.

Es kann vorgesehen sein, dass die ersten, die dritten und die fünften Befestigungsdurchbrüche bezüglich der ersten Drehachse jeweils um 30° versetzt zueinander angeordnet sind. Hierdurch wird vermieden, dass sich die genannten Befestigungsdurchbrüche gegenseitig überschneiden. Aufgrund der oben angesprochenen Spiegelsymmetrie gilt die vorstehende Bedingung in analoger Weise für die übrigen Befestigungsdurchbrüche.

Es kann vorgesehen sein, dass der Außenumriss der Grundplatte bezüglich der Symmetrieebene spiegelsymmetrisch ausgebildet ist. Damit werden Montagefehler beim Zusammenbau der Antriebsvorrichtung vermieden.

Es kann vorgesehen sein, dass die Grundplatte einen ersten und einen zweiten Antriebsdurchbruch aufweist, die bezüglich der Symmetrieebene spiegelsymmetrisch zueinander ausgebildet sind, wobei die erste Drehachse den ersten Antriebsdurchbruch durchsetzt, wobei die zweite Drehachse den zweiten Antriebsdurchbruch durchsetzt. Durch die genannten Antriebsdurchbrüche hindurch wird vorzugsweise die Drehantriebsverbindung zwischen den Getrieberädern und dem Antriebszahnrad bzw. dem Antriebsmotor hergestellt. Der erste und der zweite Antriebsdurchbruch sind vorzugsweise kreisrund ausgebildet.

Es kann vorgesehen sein, dass die Getriebebaugruppe eine Spannvorrichtung für das Zugmittel aufweist, welche bezüglich der Symmetrieebene spiegelsymmetrisch ausgebildet ist. Durch die Spannvorrichtung soll die Zugspannung des Zugmittels eingestellt werden. Durch die vorgeschlagene Spiegelsymmetrie der Spannvorrichtung ist gewährleistet, dass die genannte Zugspannungseinstellung mit beiden Anbauvarianten der Getriebevorrichtung in gleicher Weise arbeitet.

Es kann vorgesehen sein, dass die Getriebebaugruppe eine gesonderte Abdeckhaube aufweist, welche das Zugmittel umschließt, wobei sie an der Grundplatte befestigt ist, wobei die Abdeckhaube bezüglich der Symmetrieebene spiegelsymmetrisch ausgebildet ist. Mit der Abdeckhaube sollen das Zugmittel und die Getrieberäder vor Umgebungseinflüssen geschützt werden. Weiter sollen Verletzungen des Benutzers durch das Zugmittel vermieden werden.

Es können eine gesonderte dritte und eine gesonderte vierte Lagerbaugruppe vorgesehen sein, welche an einer gesonderten, ebenen Lagerplatte befestigt sind, wobei das erste Getrieberad an der dritten Lagerbaugruppe drehbar gelagert ist, wobei das zweite Getrieberad an der vierten Lagerbaugruppe drehbar gelagert ist. Hierdurch wird die Steifigkeit der Drehlagerung des ersten und des zweiten Getrieberades wesentlich erhöht. Die Lagerplatte ist bezüglich der Symmetrieebene vorzugsweise spiegelsymmetrisch ausgebildet. Die Lagerplatte ist vorzugsweise fest mit der Grundplatte verbunden.

Es kann vorgesehen sein, dass die erste und/oder die zweite und/oder die dritte und/oder die vierte Lagerbaugruppe identisch ausgebildet sind. Die genannten Lagerbaugruppen umfassen vorzugsweise jeweils ein gesondertes Radialwälzlager.

Es kann vorgesehen sein, dass an der Grundplatte eine Säule befestigt ist, welche parallel zur Hochachse verläuft. Die Säule ist vorzugsweise am Untergrund befestigbar, so dass das Gewicht der Antriebsvorrichtung am Untergrund abgestützt werden kann.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Darstellung der erfindungsgemäßen Antriebsvorrichtung ohne die Abdeckhaube und die Lagerplatte;
- Fig. 2: eine Explosionsansicht der Getriebebaugruppe der Antriebsvorrichtung nach Fig. 1;
- Fig. 3: eine Vorderansicht der Grundplatte der Antriebsvorrichtung nach Fig. 1; und
- Fig. 4: eine Schnittansicht der Antriebsvorrichtung nach Fig. 1, wobei die Schnittebene durch die erste Drehachse verläuft.

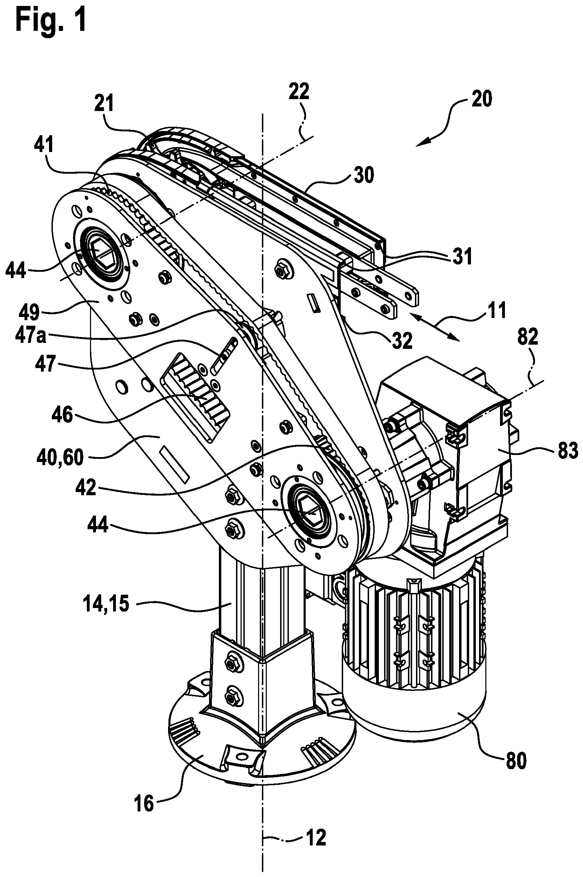

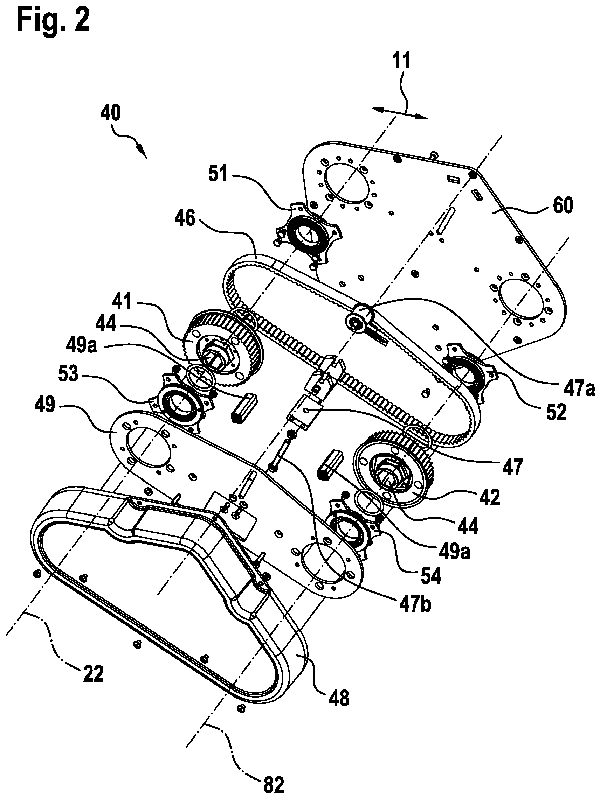

Fig. 1 zeigt eine perspektivische Darstellung der erfindungsgemäßen Antriebsvorrichtung 20 ohne die Abdeckhaube (Nr. 48 in Fig. 2). Die Antriebsvorrichtung 20 dient zum Antrieb einer Förderkette, wie sie beispielsweise aus der DE 10 2011 112 398 A1 oder der DE 10 2011 112 396 A1 bekannt ist. Die Antriebsvorrichtung 20 hat ein Antriebszahnrad 21, welches in Antriebseingriff mit der Förderkette bringbar ist. Das Antriebszahnrad 21 ist in einem Antriebsgehäuse 30 bezüglich einer ersten Drehachse 22 drehbar gelagert. Das Antriebsgehäuse 30 ist im Wesentlichen gemäß der DE 10 2013 215 751 A1 ausgebildet, deren gesamter Inhalt in Bezug genommen und zum Inhalt der vorliegenden Anmeldung gemacht wird. Das Antriebsgehäuse 30 hat insbesondere einen Ketteneinlauf 31 und einen Kettenauslauf 32, an denen jeweils ein zugeordneter Abschnitt der Förderkette entlang einer Förderrichtung 11 gleitbeweglich geführt ist, wobei die Förderrichtung 11 senkrecht zur ersten Drehachse 22 ausgerichtet ist. Die Förderkette wird ausgehend vom Ketteneinlauf 31 über das Antriebszahnrad 21, weiter zum Kettenauslauf 32 gleitbeweglich geführt. Das Antriebsgehäuse 30 ist im Wesentlichen spiegelsymmetrisch bezüglich einer Ebene ausgebildet, welche senkrecht zur ersten Drehachse 22 verläuft.

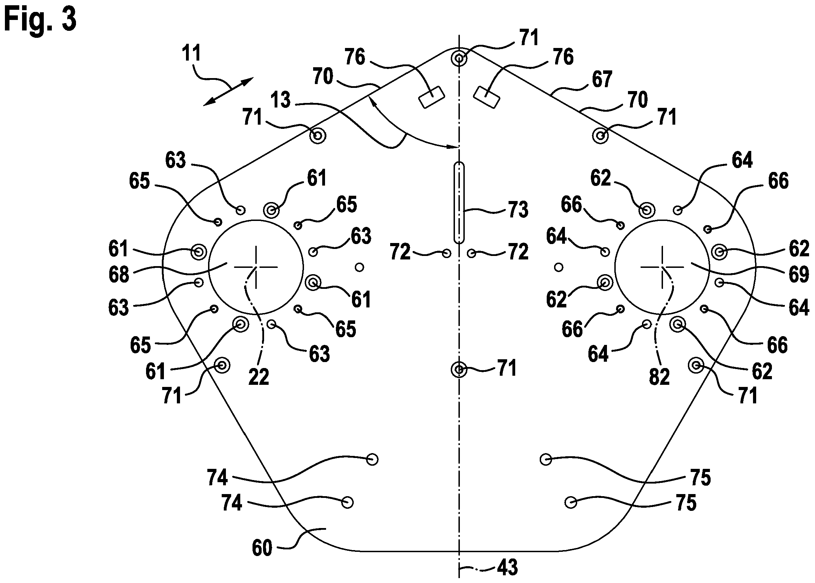

An dem Antriebsgehäuse 30 ist eine Grundplatte 60 einer Getriebegaugruppe 40 befestigt, insbesondere verschraubt. Die Grundplatte 60 ist in Form einer ebenen Platte mit konstanter Dicke ausgebildet, wobei sie senkrecht zur ersten Drehachse 22 ausgerichtet ist. Wegen weiterer Details wird auf die Ausführungen zu Fig. 3 verwiesen. Ein Vorteil der vorliegenden Antriebsvorrichtung 20 besteht darin, dass ein und dieselbe Getriebebaugruppe 40 sowohl auf der in Fig. 1 dargestellten Seite als auch auf der gegenüberliegenden Seite des Antriebsgehäuses 30 befestigt werden kann. Der Antriebsmotor 80 ist in beiden Fällen platzsparend unterhalb des Ketteneinlaufs 31 bzw. des Kettenauslaufs 32 angeordnet.

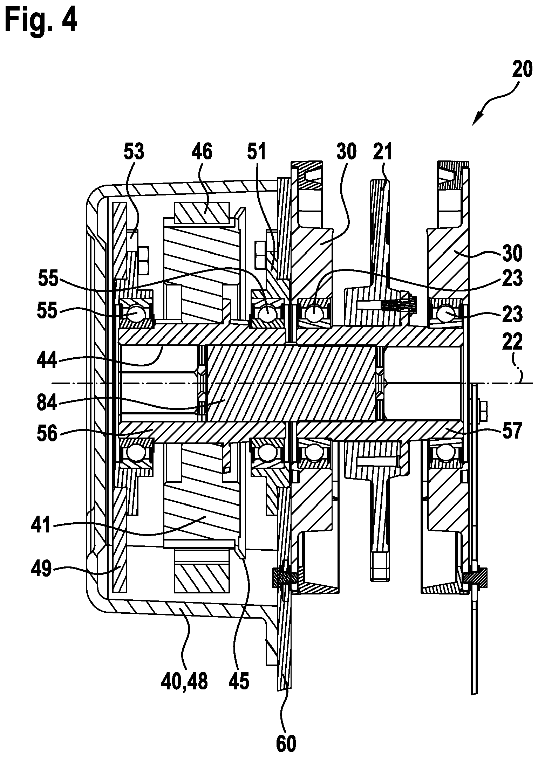

Die Getriebebaugruppe 40 hat ein erstes und ein zweites Getrieberad 41; 42. Das erste Getrieberad 41 ist bezüglich der ersten Drehachse 22 drehbar an der Grundplatte 60 gelagert. Das zweite Getrieberad 42 ist bezüglich einer zweiten Drehachse drehbar an der Grundplatte 60 gelagert, wobei die zweite Drehachse 82 parallel zur ersten Drehachse 22 angeordnet ist. Das erste und das zweite Getrieberad 41; 42 sind identisch ausgebildet, wobei sie um 180° gedreht zueinander eingebaut sind. Insbesondere sind sie mit den gleichen Antriebsmitteln 44 versehen, welche jeweils in Form eines Innensechskantprofils ausgebildet sind, welches das betreffende Getrieberad 41; 42 entlang der zugeordneten Drehachse 22; 82 durchsetzt. Über das Antriebsmittel 44 können die beiden Getrieberäder 41; 42 abhängig von der Einbaulage der Getriebebaugruppe 40 entweder mit dem Antriebszahnrad 21 oder mit dem Antriebsmotor 80 in Drehantriebsverbindung gebracht werden. Wegen weiterer Details wird auf die Ausführungen zu Fig. 4 verwiesen.

Das erste und das zweite Getrieberad 41; 42 sind vorliegend als Zahnriemenräder ausgebildet, wobei sie von einem gemeinsamen Zugmittel 46 in Form eines Zahnriemens umschlungen sind. Es können aber auch andere Zugmittel 46, beispielsweise eine Kette, Verwendung finden.

Zwischen dem ersten und dem zweiten Getrieberad 41; 42 ist eine Spannvorrichtung 47 für das Zugmittel 46 angeordnet. Die Spannvorrichtung 47 ist zwischen den beiden freien Abschnitten des Zugmittels 46 angeordnet, wobei sie einen freien Abschnitt mittels einer drehbaren Spannrolle 47a (siehe auch Fig. 2) vom anderen freien Abschnitt des Zugmittels weg drückt. Die Spannungseinstellung des Zugmittels 47 erfolgt mit einer Spannschraube (Nr. 47b in Fig. 2). Die Spannvorrichtung 47 ist spiegelsymmetrisch bezüglich einer Symmetrieebene (Nr. 43 in Fig. 3) ausgebildet, wobei die erste und die zweite Drehachse 22; 82 ebenfalls spiegelsymmetrisch zu dieser Symmetrieebene angeordnet sind.

Weiter ist auf die Säule 14 hinzuweisen, welche aus eine Profilkörper 15 und einem Standfuß 16 zusammengesetzt ist. Der Profilkörper 15 erstreckt sich mit einer konstanten, im Wesentlichen quadratischen Querschnittsform, parallel zu einer Hochachse 12, welche senkrecht zur ersten Drehachse 22 und zur Förderrichtung 11 ausgerichtet ist. Der Profilkörper 15 ist mit der Grundplatte 60 fest verschraubt. Am gegenüberliegenden Ende ist der Standfuß 16 fest mit dem Profilkörper 15 verschraubt. Über den Standfuß 16 wird das Gewicht der Antriebsvorrichtung 20 am (nicht dargestellten) Untergrund abgestützt.

Der Antriebsmotor 80 ist in Form eines Getriebemotors mit einem Elektromotor und einem Getriebe 83 ausgebildet. Das Getriebe 83 ist an der Grundplatte 60 befestigt, insbesondere verschraubt. Entsprechende Antriebsmotore 80 sind aus dem Katalog "Kettenfördersystem VarioFlow plus" Ausgabe 1.0 der Bosch Rexroth AG bekannt.

Fig. 2 zeigt eine Explosionsansicht der Getriebebaugruppe 40 der Antriebsvorrichtung nach Fig. 1. Zu erkennen sind insbesondere die erste, die zweite, die dritte und die vierte Lagerbaugruppe 51; 52; 53; 54, die jeweils identisch ausgebildet sind. Die erste und die zweite Lagerbaugruppe 51; 52 sind mit der Grundplatte 60 verschraubt und zwar jeweils über die fünften und die sechsten Befestigungsdurchbrüche (Nr. 65; 66 in Fig. 3), welche vorzugsweise als Innengewinde ausgebildet sind. Die dritte und die vierte Lagerbaugruppe 53; 54 sind in entsprechender Weise mit einer gesonderten Lagerplatte 49 verschraubt, wobei sie spiegelbildlich zur zugeordneten ersten bzw. zweiten Lagerbaugruppe 51; 52 angeordnet sind. Die Lagerplatte 49 ist in Form einer ebenen Platte mit konstanter Dicke ausgebildet, welche parallel zur Grundplatte 60 angeordnet ist, wobei sie vorliegend über zwei Abstandhalter 49a fest mit dieser verbunden ist. Die Abstandhalter 49a sind zwischen dem ersten und dem zweiten Getrieberad 41; 42 angeordnet. Das erste Getrieberad 41 ist an der ersten und der dritten Lagerbaugruppe 51; 53 bezüglich der ersten Drehachse 22 drehbar gelagert, wobei weitere Details mit Bezug auf Fig. 4 erläutert werden. Das zweite Getrieberad 42 ist in entsprechender Weise an der zweiten und der dritten Lagerbaugruppe 52; 54 bezüglich der zweiten Drehachse 82 drehbar gelagert.

Die Abdeckhaube 48 ist topfartig ausgebildet, wobei sie vorzugsweise aus Kunststoff hergestellt ist. Die Abdeckhaube 48 ist ausschließlich an der Grundplatte 60 mittels Schrauben befestigt, wobei sie die Getrieberäder 41; 42 und das Zugmittel 46 im Wesentlichen dicht umgibt. Damit werden die genannten Teile vor Umgebungseinflüssen geschützt und können keine Verletzungen beim Benutzer der Antriebsvorrichtung hervorrufen.

Fig. 3 zeigt eine Vorderansicht der Grundplatte 60 der Antriebsvorrichtung nach Fig. 1. Die Grundplatte 60 ist in Form einer ebenen Platte mit konstanter Dicke ausgebildet. Sie weist eine Symmetrieebene 43 auf, wobei insbesondere die erste und die zweite Drehachse 22; 82 spiegelsymmetrisch bezüglich dieser Symmetrieebene 43 angeordnet sind. Der ersten und der zweiten Drehachse 22; 82 ist jeweils ein erster bzw. zweiter Antriebsdurchbruch 68; 69 zugeordnet, der kreisrund bezüglich der betreffenden Drehachse 22; 82 ausgebildet ist. Um den ersten Antriebsdurchbruch 68 herum sind die ersten, die dritten und die fünften Befestigungsdurchbrüche 61; 63; 65 angeordnet. Um den zweiten Antriebsdurchbruch 69 herum sind die zweiten, die vierten und die sechsten Antriebsdurchbrüche 62; 64; 66 angeordnet.

Die ersten und die zweiten Befestigungsdurchbrüche 61; 62 sind bezüglich der Symmetrieebene 43 spiegelsymmetrisch zueinander ausgebildet. Sie dienen der Befestigung der Grundplatte 60 am Antriebsgehäuse (Nr. 30 in Fig. 1). Bei der in Fig. 1 dargestellten Anordnung der Getriebebaugruppe 30 werden ausschließlich die ersten Befestigungsdurchbrüche 61 verwendet. Wenn die Getriebebaugruppe 30 an der gegenüberliegenden Seite befestigt wird, werden ausschließlich die zweiten Befestigungsdurchbrüche 62 verwendet. Es sind jeweils vier erste bzw. zweite Befestigungsdurchbrüche 61; 62 vorgesehen, die bezüglich der zugeordneten Drehachse 22; 82 um 90° beabstandet sind. Die ersten und die zweiten Befestigungsdurchbrüche 61; 62 sind als Senkbohrungen ausgeführt, in denen Senkkopfschrauben versenkt aufgenommen sind, welche in das Antriebsgehäuse eingeschraubt sind.

Die dritten und die vierten Befestigungsdurchbrüche 63; 64 sind bezüglich der Symmetrieebene 43 ebenfalls spiegelsymmetrisch zueinander ausgebildet. Sie dienen der Befestigung des Antriebsmotors (Nr. 80 in Fig. 1) an der Grundplatte 60. Bei der in Fig. 1 dargestellten Anordnung der Getriebebaugruppe 30 werden ausschließlich die vierten Befestigungsdurchbrüche 64 verwendet. Wenn die Getriebebaugruppe 30 an der gegenüberliegenden Seite befestigt wird, werden ausschließlich die dritten Befestigungsdurchbrüche 63 verwendet. Es sind jeweils vier dritte bzw. vierte Befestigungsdurchbrüche 63; 64 vorgesehen, die bezüglich der zugeordneten Drehachse 22; 82 um 90° beabstandet sind. Die dritten und die vierten Befestigungsdurchbrüche 63; 64 sind wahlweise als Bohrungen oder als Innengewinde ausgeführt.

Die fünften Befestigungsdurchbrüche 65 dienen der Befestigung der ersten Lagerbaugruppe (Nr. 51 in Fig. 2). Die sechsten Befestigungsdurchbrüche dienen der Befestigung der zweiten Lagerbaugruppe (Nr. 52 in Fig. 2). Die fünften und sechsten Befestigungsdurchbrüche 65; 66 sind bezüglich der Symmetrieebene 43 spiegelsymmetrisch zueinander ausgebildet, wobei sie als Innengewinde ausgebildet sind. Es sind jeweils vier fünfte bzw. sechste Befestigungsdurchbrüche 65; 66 vorgesehen, die bezüglich der zugeordneten Drehachse 22; 82 um 90° beabstandet sind.

Insgesamt sind der ersten und der zweiten Drehachse 22; 82 jeweils zwölf Befestigungsdurchbrüche 61; 63; 65 bzw. 62; 64; 66 zugeordnet, wobei benachbarte Befestigungsdurchbrüche 61; 63; 65 bzw. 62; 64; 66 bezüglich der betreffenden Drehachse 22; 82 um 30° beabstandet sind.

Der Außenumriss 67 der Grundplatte 60 ist spiegelsymmetrisch bezüglich der Symmetrieebene 43 ausgebildet. Hinzuweisen ist auf die beiden mit der Bezugsziffer 70 gekennzeichneten geraden Abschnitte des Außenumrisses 67, von denen je nach Einbaulage jeweils einer parallel zur Förderrichtung 11 ausgerichtet ist. Der Winkel 13 zwischen der Symmetrieebene 43 und der Förderrichtung 11 bzw. den geraden Abschnitten 70 beträgt vorzugsweise 60°. Hierdurch ergibt sich eine günstige Anordnung des Antriebsmotors unterhalb des Einlaufs bzw. des Auslaufs (Nr. 31; 32 in Fig. 1). Darüber hinaus kann die Drehachse des Elektromotors des Antriebsmotors in allen Einbaulagen der Getriebebaugruppe 30 problemlos parallel oder senkrecht zur Hochachse (Nr. 12 in Fig. 1) ausgerichtet werden.

Die siebten Befestigungsdurchbrüche 71, die größtenteils am Außenrand der Grundplatte 60 angeordnet sind, dienen der Befestigung der Abdeckhaube (Nr. 80 in Fig. 2). Die beiden achten Befestigungsdurchbrüche 72 und das entlang der Symmetrieebene 43 verlaufende Langloch 73 dienen der Befestigung der Spannvorrichtung (Nr. 47 in Fig. 1). Sie sind an der Lagerplatte (Nr. 49 in Fig. 2) in entsprechender Weise vorhanden. Die neunten und die zehnten Befestigungsdurchbrüche 74; 75 dienen der Befestigung der Säule (Nr. 14 in Fig. 1). Sie sind bezüglich der Symmetrieebene 43 spiegelsymmetrisch zueinander angeordnet. Bei der in Fig. 1 dargestellten Anordnung der Getriebebaugruppe 30 werden ausschließlich die zehnten Befestigungsdurchbrüche 75 verwendet. Wenn die Getriebebaugruppe 30 an der gegenüberliegenden Seite befestigt wird, werden ausschließlich die neunten Befestigungsdurchbrüche 74 verwendet. Die neunten bzw. zehnten Befestigungsdurchbrüche 74; 75 liegen jeweils auf einer gedachten Linie, welche senkrecht zur maßgeblichen Förderrichtung 11 verläuft. Die beiden langgestreckten elften Befestigungsdurchbrüche 76 dienen zur zusätzlichen Befestigung der Grundplatte 60 an dem Antriebsgehäuse. Sie sind spiegelsymmetrisch zueinander bezüglich der Symmetrieebene 43 ausgebildet, wobei je nach Einbaulage der Getriebebaugruppe nur jeweils ein elfter Befestigungsdurchbruch 76 Verwendung findet.

Fig. 4 zeigt eine Schnittansicht der Antriebsvorrichtung 20 nach Fig. 1, wobei die Schnittebene durch die erste Drehachse 22 verläuft. Zu erkennen sind insbesondere das erste und das zweite Achsteil 56; 57, welche vorzugsweise identisch ausgebildet sind. Auf dem ersten Achsteil 56 ist das erste Getrieberad 41 fest aufgenommen. Auf dem zweiten Achsteil 57 ist das Antriebszahnrad 21 festaufgenommen. Das erste und das zweite Achsteil sind jeweils an zwei zugeordneten Radialwälzlagern 55; 23 bezüglich der ersten Drehachse 22 drehbar gelagert. Die Radialwälzlager 55 sind in der ersten und der dritten Lagerbaugruppe 51; 53 mit ihrem Außenring fest aufgenommen. Das erste und das zweite Achsteil 56; 57 haben jeweils ein Antriebsmittel 44, welches in Form eines Durchbruchs mit einer konstanten sechseckigen Querschnittsform ausgebildet ist. Die Sechstkantwelle 84, welche in beide Antriebsmittel 44 formschlüssig eingreift, vermittelt die Drehantriebsverbindung zwischen dem ersten Getrieberad 41 und dem Antriebszahnrad 21.

Weiter ist auf die Seitenführung 45 am ersten Getrieberad 45 hinzuweisen, welche nur an einer Seite vorgesehen ist. Das zweite Getrieberad ist identisch zum ersten Getrieberad 41 ausgebildet, wobei es um 180° gedreht zu diesem eingebaut ist. Die dortige Seitenführung befindet sich demnach auf der gegenüberliegenden Seite des Zugmittels 46, so dass dieses beidseitig geführt ist. Die Drehlagerung des zweiten Getrieberades (Nr. 42 in Fig. 2) ist im Übrigen identisch zu der des ersten Getrieberades 41 ausgebildet.

### Bezugszeichen

- 11: Förderrichtung
- 12: Hochachse
- 13: Neigungswinkel zwischen Symmetrieebene und Förderrichtung
- 14: Säule
- 15: Profilkörper
- 16: Standfuß

- 20: Antriebsvorrichtung
- 21: Antriebszahnrad
- 22: erste Drehachse
- 23: Radialwälzlager

- 30: Antriebsgehäuse
- 31: Ketteneinlauf
- 32: Kettenauslauf

- 40: Getriebebaugruppe
- 41: erstes Getrieberad
- 42: zweites Getrieberad
- 43: Symmetrieebene
- 44: Antriebsmittel
- 45: Seitenführung am Getrieberad
- 46: Zugmittel
- 47: Spannvorrichtung
- 47a: Spannrolle
- 47b: Spannschraube
- 48: Abdeckhaube
- 49: Lagerplatte
- 49a: Abstandhalter
- 51: erste Lagerbaugruppe
- 52: zweite Lagerbaugruppe
- 53: dritte Lagerbaugruppe
- 54: vierte Lagerbaugruppe
- 55: Radialwälzlager
- 56: erstes Achsteil
- 57: zweites Achsteil

- 60: Grundplatte
- 61: erster Befestigungsdurchbruch
- 62: zweiter Befestigungsdurchbruch
- 63: dritter Befestigungsdurchbruch
- 64: vierter Befestigungsdurchbruch
- 65: fünfter Befestigungsdurchbruch
- 66: sechster Befestigungsdurchbruch
- 67: Außenumriss der Grundplatte
- 68: erster Antriebsdurchbruch
- 69: zweiter Antriebsdurchbruch
- 70: gerader Abschnitt des Außenumrisses
- 71: siebter Befestigungsdurchbruch
- 72: achter Befestigungsdurchbruch
- 73: Langloch
- 74: neunter Befestigungsdurchbruch
- 75: zehnter Befestigungsdurchbruch
- 76: elfter Befestigungsdurchbruch

- 80: Antriebsmotor
- 82: zweite Drehachse
- 83: Getriebe
- 84: Sechskantwelle

## Patentansprüche

1. Antriebsvorrichtung (20) für eine Förderkette, wobei die Antriebsvorrichtung (20) ein Antriebszahnrad (21), ein Antriebsgehäuse (30), eine Getriebebaugruppe (40) und einen Antriebsmotor (80) aufweist, wobei das Antriebszahnrad (21) bezüglich einer ersten Drehachse (22) drehbar in dem Antriebsgehäuse (30) gelagert ist, wobei es in Antriebseingriff mit der Förderkette bringbar ist, wobei das Antriebsgehäuse (30) einen Ketteneinlauf (31) aufweist, welcher in Führungseingriff mit der Förderkette bringbar ist, wobei er parallel zu einer Förderrichtung (11) verläuft, welche senkrecht zur ersten Drehachse (22) angeordnet ist, wobei der Antriebsmotor (80) in Richtung einer Hochachse (12), die senkrecht zur Förderrichtung (11) und zur ersten Drehachse (22) ausgerichtet ist, unterhalb des Ketteneinlaufs (31) angeordnet ist, wobei er ein Antriebsmittel aufweist, welches bezüglich einer zweiten Drehachse (82) drehbar ist, wobei er über das Antriebsmittel und über die Getriebebaugruppe (40) in Drehantriebsverbindung mit dem Antriebszahnrad (21) steht, wobei die zweite Drehachse (82) parallel beabstandet zur ersten Drehachse (81) angeordnet ist, wobei die Getriebebaugruppe (40) eine Grundplatte (60) aufweist, welche am Antriebsgehäuse (30) befestigt ist, wobei die Grundplatte (60) senkrecht zur ersten und zur zweiten Drehachse (22; 82) angeordnet ist, wobei die Grundplatte (60) mehrere erste, mehrere zweite, mehrere dritte und mehrere vierte Befestigungsdurchbrüche (61; 62; 63; 64) aufweist, die jeweils separat voneinander ausgebildet sind,
**dadurch gekennzeichnet, dass** die ersten und die dritten Befestigungsdurchbrüche (61; 63) jeweils gleichförmig verteilt um die erste Drehachse (22) angeordnet sind, wobei die zweiten und die vierten Befestigungsdurchbrüche (62; 64) jeweils gleichförmig verteilt um die zweite Drehachse (82) angeordnet sind, wobei der Antriebsmotor (80) an der Grundplatte (60) befestigt ist, wobei damit an der Grundplatte von vorneherein alle Befestigungsdurchbrüche vorgesehen sind, die sowohl für den Links- als auch für den Rechtsanbau der Getriebebaugruppe benötigt werden, wobei das Antriebsgehäuse (30) sowohl an den ersten als auch an den zweiten Befestigungsdurchbrüchen (61; 62) befestigbar ist, wobei der Antriebsmotor (80) sowohl an den dritten als auch den vierten Befestigungsdurchbrüchen (63; 64) befestigbar ist.

2. Antriebsvorrichtung nach Anspruch 1,
wobei die erste und die zweite Drehachse (22; 82) spiegelsymmetrisch bezüglich einer Symmetrieebene (43) angeordnet sind, wobei die ersten Befestigungsdurchbrüche (61) bezüglich der Symmetrieebene (43) spiegelsymmetrisch zu den dritten Befestigungsdurchbrüchen (63) angeordnet sind, wobei die zweiten Befestigungsdurchbrüche (62) bezüglich der Symmetrieebene spiegelsymmetrisch zu den vierten Befestigungsdurchbrüchen (64) angeordnet sind.

3. Antriebsvorrichtung nach Anspruch 2,
wobei der Neigungswinkel (13) zwischen der Symmetrieebene (43) und der Förderrichtung (11) zwischen 15° und 75° beträgt.

4. Antriebsvorrichtung nach einem der vorstehenden Ansprüche,
wobei die Getriebebaugruppe (40) ein erstes Getrieberad (41) aufweist, welches bezüglich der ersten Drehachse (22) drehbar ist, wobei die Getriebebaugruppe (40) ein zweites Getrieberad (42) aufweist, welches bezüglich der zweiten Drehachse (82) drehbar ist, wobei das erste und das zweite Getrieberad jeweils ein Antriebsmittel (44) aufweisen, welches sowohl mit dem Antriebsmotor (80) als auch mit dem Antriebszahnrad (21) in Drehantriebsverbindung bringbar ist, wobei das erste und das zweite Getrieberad (41; 42) von einem gemeinsamen endlosen Zugmittel (46) umschlungen werden.

5. Antriebsvorrichtung nach einem der vorstehenden Ansprüche,
wobei die Grundplatte (60) mehrere fünfte und mehrere sechste Befestigungsdurchbrüche (65; 66) aufweist, die jeweils separat voneinander und von den übrigen Befestigungsdurchbrüchen (61; 62; 63; 64) ausgebildet sind, wobei die fünften Befestigungsdurchbrüche (65) gleichförmig verteilt um die erste Drehachse (22) angeordnet sind, wobei die sechsten Befestigungsdurchbrüche (66) gleichförmig verteilt um die zweite Drehachse (82) angeordnet sind, wobei die fünften Befestigungsdurchbrüche (65) bezüglich der Symmetrieebene (43) spiegelsymmetrisch zu den sechsten Befestigungsdurchbrüchen (66) angeordnet sind.

6. Antriebsvorrichtung nach Anspruch 5, rückbezogen auf Anspruch 4,
wobei das erste Getrieberad (41) in einer gesonderten ersten Lagerbaugruppe (51) drehbar gelagert ist, welche an den fünften Befestigungsdurchbrüchen (65) befestigt ist, wobei das zweite Getrieberad (42) in einer gesonderten zweiten Lagerbaugruppe (52) drehbar gelagert ist, welche an den sechsten Befestigungsdurchbrüchen (66) befestigt ist.

7. Antriebsvorrichtung nach einem der vorstehenden Ansprüche,
wobei jeweils vier erste und vier zweite Befestigungsdurchbrüche (61; 62) und jeweils vier dritte und vier vierte Befestigungsdurchbrüche (63; 64) und gewünschtenfalls jeweils vier fünfte und vier sechste Befestigungsdurchbrüche (65; 66) vorgesehen sind.

8. Antriebsvorrichtung nach einem der vorstehenden Ansprüche,
wobei die ersten, die dritten und die fünften Befestigungsdurchbrüche (61; 63; 65) bezüglich der ersten Drehachse (22) jeweils um 30° versetzt zueinander angeordnet sind.

9. Antriebsvorrichtung nach einem der Ansprüche 2 bis 8,
wobei der Außenumriss (67) der Grundplatte (60) bezüglich der Symmetrieebene (43) spiegelsymmetrisch ausgebildet ist.

10. Antriebsvorrichtung nach einem der Ansprüche 2 bis 9,
wobei die Grundplatte (60) einen ersten und einen zweiten Antriebsdurchbruch (68; 69) aufweist, die bezüglich der Symmetrieebene (43) spiegelsymmetrisch zueinander ausgebildet sind, wobei die erste Drehachse (22) den ersten Antriebsdurchbruch (68) durchsetzt, wobei die zweite Drehachse (82) den zweiten Antriebsdurchbruch (69) durchsetzt.

11. Antriebsvorrichtung nach einem der Ansprüche 4 bis 10,
wobei die Getriebebaugruppe (40) eine Spannvorrichtung (47) für das Zugmittel (46) aufweist, welche bezüglich der Symmetrieebene (43) spiegelsymmetrisch ausgebildet ist.

12. Antriebsvorrichtung nach einem der Ansprüche 4 bis 11,
wobei die Getriebebaugruppe (40) eine gesonderte Abdeckhaube (48) aufweist, welche das Zugmittel (46) umschließt, wobei sie an der Grundplatte (60) befestigt ist, wobei die Abdeckhaube (48) bezüglich der Symmetrieebene (43) spiegelsymmetrisch ausgebildet ist.

13. Antriebsvorrichtung nach einem der Ansprüche 4 bis 12,
wobei eine gesonderte dritte und eine gesonderte vierte Lagerbaugruppe (53; 54) vorgesehen sind, welche an einer gesonderten, ebenen Lagerplatte (49) befestigt sind, wobei das erste Getrieberad (41) an der dritten Lagerbaugruppe (53) drehbar gelagert ist, wobei das zweite Getrieberad (42) an der vierten Lagerbaugruppe (54) drehbar gelagert ist.

14. Antriebsvorrichtung nach einem der Ansprüche 4 bis 13,
wobei die erste und/oder die zweite und/oder die dritte und/oder die vierte Lagerbaugruppe (51; 52; 53; 54) identisch ausgebildet sind.

15. Antriebsvorrichtung nach einem der vorstehenden Ansprüche,
wobei an der Grundplatte (60) eine Säule (14) befestigt ist, welche parallel zur Hochachse (12) verläuft.

## Claims

1. Drive apparatus (20) for a conveyor chain, the drive apparatus (20) having a drive gearwheel (21), a drive housing (30), a transmission assembly (40) and a drive motor (80), the drive gearwheel (21) being mounted in the drive housing (30) such that it can be rotated with regard to a first rotational axis (22), it being possible for the said drive gearwheel (21) to be brought into drive engagement with the conveyor chain, the drive housing (30) having a chain inlet (31) which can be brought into guide engagement with the conveyor chain, the said chain inlet (31) running parallel to a conveying direction (11) which is arranged perpendicularly with respect to the first rotational axis (22), the drive motor (80) being arranged below the chain inlet (31) in the direction of a vertical axis (12) which is oriented perpendicularly with respect to the conveying direction (11) and with respect to the first rotational axis (22), the said drive motor (80) having a drive means which can be rotated with regard to a second rotational axis (82), the said drive motor (80) being rotationally drive-connected to the drive gearwheel (21) via the drive means and via the transmission assembly (40), the second rotational axis (82) being arranged spaced apart in parallel from the first rotational axis (81), the transmission assembly (40) having a base plate (60) which is fastened to the drive housing (30), the base plate (60) being arranged perpendicularly with respect to the first and with respect to the second rotational axis (22; 82), the base plate (60) having a plurality of first, a plurality of second, a plurality of third and a plurality of fourth fastening apertures (61; 62; 63; 64) which are configured in each case separately from one another, **characterized in that** the first and the third fastening apertures (61; 63) are arranged in each case in a uniformly distributed manner about the first rotational axis (22), the second and the fourth fastening apertures (62; 64) being arranged in each case in a uniformly distributed manner about the second rotational axis (82), the drive motor (80) being fastened to the base plate (60), all the fastening apertures which are required both for the lefthand attachment and for the right-hand attachment of the transmission assembly therefore being provided from the outset on the base plate, it being possible for the drive housing (30) to be fastened both to the first and to the second fastening apertures (61; 62), it being possible for the drive motor (80) to be fastened both to the third and to the fourth fastening apertures (63; 64).

2. Drive apparatus according to Claim 1, the first and the second rotational axis (22; 82) being arranged mirror-symmetrically with regard to a plane of symmetry (43), the first fastening apertures (61) being arranged with respect to the third fastening apertures (63) in a mirror-symmetrical manner with regard to the plane of symmetry (43), the second fastening apertures (62) being arranged with respect to the fourth fastening apertures (64) in a mirror-symmetrical manner with regard to the plane of symmetry.

3. Drive apparatus according to Claim 2, the angle of inclination (13) between the plane of symmetry (43) and the conveying direction (11) being between 15° and 75°.

4. Drive apparatus according to one of the preceding claims, the transmission assembly (40) having a first transmission gear (41) which can be rotated with regard to the first rotational axis (22), the transmission assembly (40) having a second transmission gear (42) which can be rotated with regard to the second rotational axis (82), the first and the second transmission gear in each case having a drive means (44) which can be rotationally drive-connected both to the drive motor (80) and to the drive gearwheel (21), the first and the second transmission gearwheel (41; 42) being wrapped around by a common endless traction mechanism (46).

5. Drive apparatus according to one of the preceding claims, the base plate (60) having a plurality of fifth and a plurality of sixth fastening apertures (65; 66) which are configured in each case separately from one another and from the remaining fastening apertures (61; 62; 63; 64), the fifth fastening apertures (65) being arranged in a uniformly distributed manner about the first rotational axis (22), the sixth fastening apertures (66) being arranged in a uniformly distributed manner about the second rotational axis (82), the fifth fastening apertures (65) being arranged with respect to the sixth fastening apertures (66) in a mirror-symmetrical manner with regard to the plane of symmetry (43).

6. Drive apparatus according to Claim 5, referring back to Claim 4, the first transmission gear (41) being mounted rotatably in a separate first bearing assembly (51) which is fastened to the fifth fastening apertures (65), the second transmission gear (42) being mounted rotatably in a separate second bearing assembly (52) which is fastened to the sixth fastening apertures (66).

7. Drive apparatus according to one of the preceding claims, in each case four first and four second fastening apertures (61; 62) and in each case four third and four fourth fastening apertures (63; 64) and, if desired, in each case four fifth and four sixth fastening apertures (65; 66) being provided.

8. Drive apparatus according to one of the preceding claims, the first, the third and the fifth fastening apertures (61; 63; 65) being arranged with respect to one another such that they are offset in each case by 30° with regard to the first rotational axis (22).

9. Drive apparatus according to one of Claims 2 to 8, the external outline (67) of the base plate (60) being of mirror-symmetrical configuration with regard to the plane of symmetry (43).

10. Drive apparatus according to one of Claims 2 to 9, the base plate (60) having a first and a second drive aperture (68; 69) which are configured with respect to one another in a mirror-symmetrical manner with regard to the plane of symmetry (43), the first rotational axis (22) penetrating the first drive aperture (68), the second rotational axis (82) penetrating the second drive aperture (69).

11. Drive apparatus according to one of Claims 4 to 10, the transmission assembly (40) having a tensioning apparatus (47) for the traction mechanism (46), which tensioning apparatus (47) is of mirror-symmetrical configuration with regard to the plane of symmetry (43).

12. Drive apparatus according to one of Claims 4 to 11, the transmission assembly (40) having a separate covering hood (48) which encloses the traction mechanism (46), the said covering hood (48) being fastened to the base plate (60), the covering hood (48) being of mirror-symmetrical configuration with regard to the plane of symmetry (43).

13. Drive apparatus according to one of Claims 4 to 12, a separate third and a separate fourth bearing assembly (53; 54) being provided which are fastened to a separate, planar bearing plate (49), the first transmission gear (41) being mounted rotatably on the third bearing assembly (53), the second transmission gear (42) being mounted rotatably on the fourth bearing assembly (54).

14. Drive apparatus according to one of Claims 4 to 13, the first and/or the second and/or the third and/or the fourth bearing assembly (51; 52; 53; 54) being of identical configuration.

15. Drive apparatus according to one of the preceding claims, a pillar (14) which runs parallel to the vertical axis (12) being fastened to the base plate (60).

## Revendications

1. Dispositif d'entraînement (20) pour une chaîne de transport, le dispositif d'entraînement (20) présentant une roue dentée d'entraînement (21), un boîtier d'entraînement (30), un module de transmission (40) et un moteur d'entraînement (80), la roue dentée d'entraînement (21) étant supportée de manière rotative par rapport à un premier axe de rotation (22) dans le boîtier d'entraînement (30), la roue d'entraînement pouvant être amenée en engagement d'entraînement avec la chaîne de transport, le boîtier d'entraînement (30) présentant une entrée de chaîne (31) qui peut être amenée en engagement de guidage avec la chaîne de transport, l'entrée de chaîne s'étendant parallèlement à une direction de transport (11) qui est disposée perpendiculairement au premier axe de rotation (22), le moteur d'entraînement (80) étant disposé dans la direction d'un axe vertical (12) qui est orienté perpendiculairement à la direction de transport (11) et au premier axe de rotation (22) en dessous de l'entrée de chaîne (31), le moteur d'entraînement présentant un moyen d'entraînement qui peut tourner par rapport à un deuxième axe de rotation (82), le moyen d'entraînement étant en liaison d'entraînement en rotation avec la roue dentée d'entraînement (21) par le biais du moyen d'entraînement et par le biais du module de transmission (40), le deuxième axe de rotation (82) étant disposé parallèlement à distance du premier axe de rotation (81), le module de transmission (40) présentant une plaque de base (60) qui est fixée au boîtier d'entraînement (30), la plaque de base (60) étant disposée perpendiculairement au premier et au deuxième axe de rotation (22 ; 82), la plaque de base (60) présentant plusieurs premiers, plusieurs deuxièmes, plusieurs troisièmes et plusieurs quatrièmes orifices de fixation (61 ; 62 ; 63 ; 64) qui sont à chaque fois réalisés séparément les uns des autres,
**caractérisé en ce que** les premiers et les troisièmes orifices de fixation (61 ; 63) sont disposés à chaque fois de manière répartie uniformément autour du premier axe de rotation (22), les deuxièmes et quatrièmes orifices de fixation (62 ; 64) étant disposés à chaque fois de manière répartie uniformément autour du deuxième axe de rotation (82), le moteur d'entraînement (80) étant fixé à la plaque de base (60), tous les orifices de fixation étant ainsi prévus sur la plaque de base dès l'abord, lesquels sont nécessaires à la fois pour le montage à gauche et pour le montage à droite du module de transmission, le boîtier d'entraînement (30) pouvant être fixé à la fois au niveau des premiers et au niveau des deuxièmes orifices de fixation (61 ; 62), le moteur d'entraînement (80) pouvant être fixé à la fois au niveau des troisièmes et au niveau des quatrièmes orifices de fixation (63 ; 64).

2. Dispositif d'entraînement selon la revendication 1, dans lequel le premier et le deuxième axe de rotation (22 ; 82) sont disposés avec une symétrie spéculaire par rapport à un plan de symétrie (43), les premiers orifices de fixation (61) étant disposés de manière symétrique par rapport aux troisièmes orifices de fixation (63), suivant une symétrie spéculaire par rapport au plan de symétrie (43), les deuxièmes orifices de fixation (62) étant disposés de manière symétrique par rapport aux quatrièmes orifices de fixation (64), suivant une symétrie spéculaire par rapport au plan de symétrie.

3. Dispositif d'entraînement selon la revendication 2, dans lequel l'angle d'inclinaison (13) entre le plan de symétrie (43) et la direction de transport (11) est compris entre 15° et 75°.

4. Dispositif d'entraînement selon l'une quelconque des revendications précédentes, dans lequel le module de transmission (40) présente une première roue de transmission (41) qui peut tourner par rapport au premier axe de rotation (22), le module de transmission (40) présentant une deuxième roue de transmission (42) qui peut tourner par rapport au deuxième axe de rotation (82), la première et la deuxième roue de transmission présentant à chaque fois un moyen d'entraînement (44) qui peut être amené en liaison d'entraînement en rotation à la fois avec le moteur d'entraînement (80) et avec la roue dentée d'entraînement (21), la première et la deuxième roue de transmission (41 ; 42) étant entourées par un moyen de traction sans fin commun (46).

5. Dispositif d'entraînement selon l'une quelconque des revendications précédentes, dans lequel la plaque de base (60) présente plusieurs cinquièmes et plusieurs sixièmes orifices de fixation (65 ; 66), qui sont réalisés à chaque fois séparément les uns des autres et des autres orifices de fixation (61 ; 62 ; 63 ; 64), les cinquièmes orifices de fixation (65) étant disposés de manière répartie uniformément autour du premier axe de rotation (22), les sixièmes orifices de fixation (66) étant disposés de manière répartie uniformément autour du deuxième axe de rotation (82), les cinquièmes orifices de fixation (65) étant disposés de manière symétrique par rapport aux sixièmes orifices fixation (66) suivant une symétrie spéculaire par rapport au plan de symétrie (43).

6. Dispositif d'entraînement selon la revendication 5, lorsqu'elle se rapporte à la revendication 4, dans lequel la première roue de transmission (41) est supportée de manière rotative dans un premier module de palier séparé (51) qui est fixé au niveau des cinquièmes orifices de fixation (65), la deuxième roue de transmission (42) étant supportée de manière rotative dans un deuxième module de palier séparé (52) qui est fixé au niveau des sixièmes orifices de fixation (66).

7. Dispositif d'entraînement selon l'une quelconque des revendications précédentes, dans lequel à chaque fois quatre premiers et quatre deuxièmes orifices de fixation (61 ; 62) et à chaque fois quatre troisièmes et quatre quatrièmes orifices de fixation (63 ; 64) et, le cas échéant, à chaque fois quatre cinquièmes et quatre sixièmes orifices de fixation (65 ; 66) sont prévus.

8. Dispositif d'entraînement selon l'une quelconque des revendications précédentes, dans lequel les premiers, les troisièmes et les cinquièmes orifices de fixation (61 ; 63 ; 65) sont disposés à chaque fois de manière décalée de 30° les uns par rapport aux autres par rapport au premier axe de rotation (22).

9. Dispositif d'entraînement selon l'une quelconque des revendications 2 à 8, dans lequel le pourtour extérieur (67) de la plaque de base (60) est réalisé avec une symétrie spéculaire par rapport au plan de symétrie (43).

10. Dispositif d'entraînement selon l'une quelconque des revendications 2 à 9, dans lequel la plaque de base (60) présente un premier et un deuxième orifice d'entraînement (68 ; 69) qui sont réalisés de manière symétrique l'un par rapport à l'autre suivant une symétrie spéculaire par rapport au plan de symétrie (43), le premier axe de rotation (22) traversant le premier orifice d'entraînement (68), le deuxième axe de rotation (82) traversant le deuxième orifice d'entraînement (69).

11. Dispositif d'entraînement selon l'une quelconque des revendications 4 à 10, dans lequel le module de transmission (40) présente un dispositif de serrage (47) pour le moyen de traction (46) qui est réalisé avec une symétrie spéculaire par rapport au plan de symétrie (43).

12. Dispositif d'entraînement selon l'une quelconque des revendications 4 à 11, dans lequel le module de transmission (40) présente un capot de recouvrement séparé (48) qui entoure le moyen de traction (46), le capot de recouvrement étant fixé à la plaque de base (60), le capot de recouvrement (48) étant réalisé avec une symétrie spéculaire par rapport au plan de symétrie (43).

13. Dispositif d'entraînement selon l'une quelconque des revendications 4 à 12, dans lequel un troisième et un quatrième module de palier séparés (53 ; 54) sont prévus, lesquels sont fixés à une plaque de palier plane séparée (49), la première roue de transmission (41) étant supportée de manière rotative sur le troisième module de palier (53), et la deuxième roue de transmission (42) étant supportée de manière rotative sur le quatrième module de palier (54).

14. Dispositif d'entraînement selon l'une quelconque des revendications 4 à 13, dans lequel le premier et/ou le deuxième et/ou le troisième et/ou le quatrième module de palier (51 ; 52 ; 53 ; 54) sont réalisés de manière identique.

15. Dispositif d'entraînement selon l'une quelconque des revendications précédentes, dans lequel une colonne (14) est fixée à la plaque de base (60), laquelle s'étend parallèlement à l'axe vertical (12).
